(19) Europäisches Patentamt
European Patent Office
Office européen des brevets

(11) **EP 1 913 336 B1**

(12) **FASCICULE DE BREVET EUROPEEN**

(45) Date de publication et mention
de la délivrance du brevet:
**24.07.2013 Bulletin 2013/30**

(21) Numéro de dépôt: **06792699.8**

(22) Date de dépôt: **04.08.2006**

(51) Int Cl.:
*G01P 3/50* (2006.01)    *A63B 71/06* (2006.01)
*A63B 69/00* (2006.01)

(86) Numéro de dépôt international:
**PCT/EP2006/065066**

(87) Numéro de publication internationale:
**WO 2007/017471 (15.02.2007 Gazette 2007/07)**

(54) **PROCEDE ET DISPOSITIF DE DETERMINATION DE LA VITESSE D'UN COUREUR**

VERFAHREN UND VORRICHTUNG ZUR ERMITTLUNG DER GESCHWINDIGKEIT EINES LÄUFERS

METHOD AND DEVICE FOR DETERMINING THE SPEED OF A RUNNER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.08.2005 CH 13092005**

(43) Date de publication de la demande:
**23.04.2008 Bulletin 2008/17**

(73) Titulaire: **CSEM Centre Suisse d'Electronique et de**
**Microtechnique SA - Recherche et Développement**
**2007 Neuchâtel (CH)**

(72) Inventeur: **VETTER, Rolf**
**CH-1116 Cottens (CH)**

(74) Mandataire: **GLN SA**
**Avenue Edouard-Dubois 20**
**2000 Neuchâtel (CH)**

(56) Documents cités:
**EP-A- 1 253 404    EP-A2- 1 066 793**
**WO-A2-03/055388**

**Description**

La présente invention se rapporte généralement au domaine des activités sportives. Elle concerne, plus particulièrement, un procédé et un dispositif de détermination de la vitesse d'un coureur à pied.

Suite à la demande croissante du marché, différents systèmes d'estimation de la vitesse d'un coureur à pied (joggeur, marcheur, etc.) ont été récemment développés. De tels systèmes font appel à des principes de mesure variés, tels que la mesure accélérométrique, l'utilisation du GPS, la mesure par radar Doppler ou encore le principe du podomètre.

Les mesures par radar Doppler ou à l'aide d'un podomètre sont encore loin, aujourd'hui, d'offrir une précision suffisante pour l'estimation de la vitesse de course. Les systèmes basés sur la technologie GPS peuvent donner une estimation de la vitesse de course avec une bonne précision, mais seulement si la réception des signaux GPS est bonne, ce qui signifie que le coureur doit se trouver en terrain découvert, loin des arbres ou de toute construction qui pourrait gêner la réception de ces signaux. Une solution basée sur l'utilisation d'un accéléromètre a été proposée par la maison Polar. Toutefois, cette solution prévoit que l'accéléromètre soit fixé sur la chaussure du coureur. Or, cette solution est, non seulement, encombrante, mais le poids supplémentaire sur la chaussure (environ 55 grammes) entraîne une augmentation de la consommation d'oxygène du coureur d'environ 1% et, par suite, une diminution de la performance de ce dernier du même pourcentage.

On connaît également du document EP 1253404, un appareil mettant en oeuvre un procédé de détermination de la vitesse d'un coureur à partir de signaux accélérométriques.

La présente invention a pour but de pallier les inconvénients mentionnés ci-dessus en offrant un procédé et un dispositif de mesure de la vitesse basés sur l'utilisation d'un accéléromètre.

Cet appareil comprend

- un capteur pour fournir un signal électrique qui représente l'accélération verticale du centre de gravité du coureur pendant la durée d'au moins une de ses foulées,
- un convertisseur analogique/numérique pour numériser ce signal,
- un processeur pour calculer la vitesse du coureur à l'aide du signal numérisé d'accélération, et
- un affichage pour fournir une indication de la valeur de vitesse calculée.

Lorsque le pied du coureur re-décolle après avoir touché le sol, le signal de l'accélération verticale change de signe.

Un autre but de l'invention est de fournir une estimation de la vitesse d'un coureur qui soit précise et fiable en utilisant un système de mesure portable et de faible consommation.

Ces buts sont atteints grâce à la méthode et au dispositif de mesure associé, tels que définis dans les revendications indépendantes. Des exemples de réalisation et de mise en oeuvre particulièrement avantageux font l'objet des revendications dépendantes.

Selon une caractéristique essentielle de l'invention; l'accéléromètre est disposé de manière à mesurer la composante verticale de l'accélération du buste du coureur, qui est une approximation de son centre de gravité. Cette composante, non seulement, présente la plus grande amplitude, mais aussi, comprend le plus grand nombre de caractéristiques simples à extraire.

En effet, les inventeurs ont pu déterminer qu'il existait une relation entre la vitesse de course d'un coureur et certaines caractéristiques du signal d'accélération verticale. Cette relation peut être modélisée de façon simple, par exemple par une relation linéaire, si la caractéristique choisie est la pente du signal d'accélération à la fin de la phase d'appui. Cette relation est propre à chaque coureur de telle sorte que le système de mesure doit être calibré auparavant.

D'autres objets, caractéristiques et avantages de la présente invention apparaîtront à la lecture de la description suivante, faite à titre d'exemple non limitatif et en relation avec les dessins annexés dans lesquels:

- la figure 1 représente un schéma de principe du dispositif de mesure de la vitesse d'un coureur,
- la figure 2 montre la forme du signal d'accélération verticale pour la foulée d'un pied du coureur,
- la figure 3 illustre schématiquement le procédé de mesure de vitesse selon la présente invention, et
- la figure 4 expose la manière de déterminer les paramètres propres du coureur.

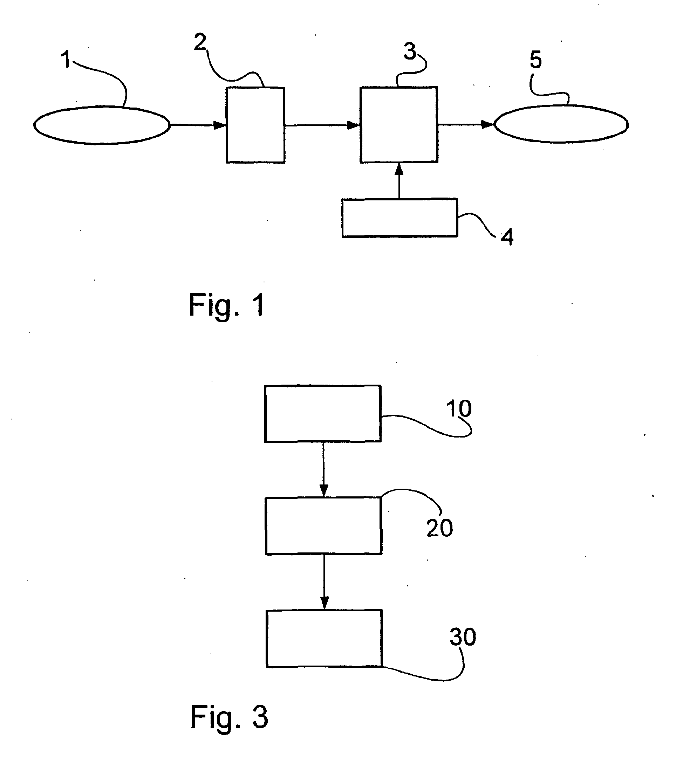

La figure 1 montre le schéma de principe du dispositif de mesure selon l'invention. Il comprend principalement au moins un capteur d'accélération verticale 1 destiné à être placé sur le corps du coureur à proximité de son centre de gravité. Une solution avantageuse consiste à le fixer sur une ceinture thoracique bien connue par les sportifs ou dans une montre portée au poignet du coureur. Le signal analogique de sortie de ce capteur est numérisé à l'aide d'un convertisseur analogique/numérique 2 avant d'être appliqué à un processeur 3, par exemple, de type DSP. Ce processeur implémente un algorithme en utilisant les informations fournies par des moyens de mémorisation 4. L'estimation de vitesse délivrée par le processeur 3 est envoyée à des moyens d'affichage 5, lesquels peuvent être de tout type connu.

A titre d'exemple, ces moyens d'affichage peuvent être ceux d'une montre portée au poignet par le coureur, une liaison radio existant entre le système de mesure et l'affichage.

Le dispositif est avantageusement doté d'un deuxième accéléromètre (non représenté au dessin) capable de mesurer la composante latérale de l'accélération du coureur afin de pouvoir séparer ses foulées gauches et droites.

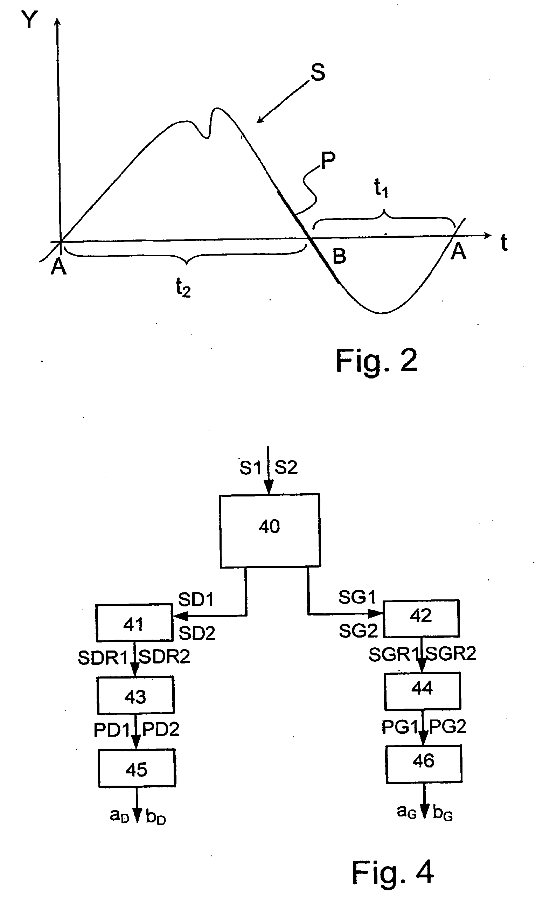

On se référera maintenant à la figure 2 qui montre, pour une foulée du coureur, la variation, en fonction du temps t, de l'amplitude Y du signal S fourni par le capteur d'accélération verticale placé à proximité de son centre de gravité. Ce signal se présente sous la forme d'une pseudo-sinusoïde dont le point A correspond à l'atterrissage du pied et le point B, au moment du changement de signe, à son re-décollage. Dans la présente description on conviendra, par souci de simplification, que l'axe des abscisses correspond à une accélération nulle alors qu'en fait il correspond à une accélération d'un «g».

Bien entendu, le signal du capteur d'accélération verticale est le reflet des atterrissages et décollages des deux pieds du coureur. La pseudo-sinusoïde alterne donc les contributions des deux pieds. Pour les reconnaître, il suffit d'observer le signal fourni par le capteur d'accélération latérale qui traduit, par une autre pseudo-sinusoïde, la rotation du torse vers la droite ou vers la gauche, selon le pied touchant le sol. Le signe positif ou négatif du signal permet donc de séparer les contributions des deux pieds.

Comme déjà mentionné, la présente invention est basée sur la constatation que la forme du signal d'accélération verticale du coureur S, représenté à la figure 2, est révélatrice de sa vitesse.

Selon un mode de réalisation avantageux de la présente invention, c'est la pente P du signal autour de son changement de signe, soit au point B, qui traduit la vitesse V du coureur selon la relation :

$$V = a.P + b,$$

a et b étant des constantes propres à chaque individu.

La figure 3 illustre le procédé de détermination de la vitesse du coureur réalisé par le microprocesseur 3. En 10, le signal d'accélération verticale est mesuré sur une période comportant au moins une foulée. Avantageusement, la période pourra comporter plusieurs foulées. Lors d'une course à vitesse régulière, le signal d'accélération oscille entre des valeurs positives et négatives, de sorte qu'il est aisé d'extraire une ou plusieurs foulées. Ensuite, un segment du signal d'accélération est isolé, ce segment étant tel qu'il correspond au signal d'accélération autour de son changement de signe. La pente P de ce segment est mesurée en 20 et la vitesse V du coureur est alors calculée en 30 selon la formule déjà mentionnée.

Concrètement, il y a donc lieu, pour chaque coureur, de déterminer, au préalable, ses paramètres propres a et b, étant entendu que, comme déjà mentionné, le signal de l'accéléromètre reflète les atterrissages et re-décollages, nécessairement entrelacés, de ses deux pieds.

Selon l'invention, la détermination préalable des paramètres a et b comporte, tout d'abord, le chronométrage du coureur sur une distance déterminée, de manière à obtenir deux valeurs $V_1$ et $V_2$ de sa vitesse V. Avantageusement, les vitesses $V_1$ et $V_2$ sont les bornes inférieure et supérieure de la plage utilisée par le coureur, comme, par exemple, sa vitesse moyenne sur 5 kilomètres et le marathon.

Simultanément, comme illustré par le diagramme de la figure 4, le signal d'accélération verticale $S_1$ - $S_2$ fourni par l'accéléromètre du coureur pour chacune des deux vitesses $V_1$ et $V_2$, est capté, numérisé et soumis aux principales opérations suivantes, comme sait le faire l'homme de métier :

1. En 40, pour chaque foulée, les composantes entrelacées pied droit $S_1$ - pied gauche $S_2$ du signal S sont séparées, en observant le signe du signal d'accélération latérale, de manière à obtenir des segments de signaux numériques $S_{D1}$ - $S_{D2}$ et $S_{G1}$ - $S_{G2}$ respectivement révélateurs des accélérations verticales des pieds droit et gauche pour les vitesses $V_1$ et $V_2$.

2. A partir de ces deux groupes de signaux, il est formé, en 41 et 42, par moyennage des segments obtenus sur plusieurs foulées, deux paires de signaux de référence $S_{DR1}$ - $S_{DR2}$ et $S_{GR1}$ - $S_{GR2}$ représentatifs de l'image d'une foulée de référence pour le pied droit et le pied gauche aux vitesses $V_1$ et $V_2$. Le moyennage est fait après alignement des segments sur le point B et élimination des foulées marginales.

3. Pour chaque signal de référence $S_{DR1}$, $S_{DR2}$, $S_{GR1}$ et $SG_{R2}$, on détermine, en 43 et 44, les pentes $P_{D1}$ - $P_{D2}$ pour le pied droit et les pentes $P_{G1}$ - $P_{G2}$ pour le pied gauche, au moment de son changement de signe au point B. Cette détermination des pentes est obtenue par approximation linéaire sur plusieurs échantillons du signal d'accélération.

Il ne reste plus, ensuite, à partir des couples de pentes correspondantes $P_{D1}$-$P_{G1}$ et $P_{D2}$ - $P_{G2}$, qu'à extraire, en 45 et 46, les couples de valeurs des paramètres $a_D$ - $b_D$ et $a_G$ - $b_G$ selon les équations suivantes :

$$V_1 = a_D\, P_{D1} + b_D \qquad \text{et} \qquad V_2 = a_D\, P_{D2} + b_D$$

$$V_1 = a_G\, P_{G1} + b_G \qquad \text{et} \qquad V_2 = a_G\, P_{G2} + b_G$$

Les couples de valeurs des paramètres $a_D$ - $b_D$ et $a_G$ - $b_G$ du coureur ainsi obtenues sont fournies au microprocesseur 3. Lorsqu'il s'agit alors, en course, de déterminer la vitesse du coureur, les pentes $P_D$ et $P_G$, déterminées comme indiqué précédemment, permettent de calculer en temps réel deux vitesses $V_D$ et $V_G$ selon les équations suivantes :

$$V_D = a_D\, P_D + b_D$$

$$V_G = a_G\, P_G + b_G$$

La valeur V de la vitesse du coureur fournie aux moyens d'affichage 5 est finalement une recombinaison des paramètres $a_D$, $a_G$, $b_D$ et $b_G$ en fonction de l'erreur quadratique moyenne sur l'approximation linéaire, mais elle peut également être le résultat de toute autre combinaison.

La présente description a été faite en se référant à une mesure de la pente du signal d'accélération autour de son changement de signe, mais on pourrait aussi, dans le cadre de l'invention, toujours en utilisant le signal d'accélération verticale S, comme montré à la figure 2, se baser sur le rapport du temps $t_1$ pendant lequel le coureur est en l'air au temps $t_2$ pendant lequel il est au sol. Dans ce cas, l'équation liant la vitesse V au rapport $t_2 / t_1$ serait :

$$V = c\,(t_2 / t_1) + d,$$

c et d étant des paramètres propres au coureur, déterminés préalablement selon le même procédure que pour les paramètres a et b.

Selon une variante de mise en oeuvre de l'invention, la détermination des paramètres du coureur peut reposer sur une combinaison des deux approches susmentionnées : pente du signal et rapport $t_2 / t_1$.

Enfin, il peut être avantageux de coupler le dispositif de l'invention à un système GPS, de manière à augmenter sa précision en cas de dégradation du signal satellitaire. Lorsque ce signal est bon, la précision de la mesure de la vitesse estimée par une technologie GPS est suffisante et permet une bonne définition des paramètres a et b. Mais si le signal se dégrade, le système par accéléromètre permet à lui seul d'estimer la vitesse à l'aide de ces paramètres.

Bien que la présente invention ait été décrite en relation avec des exemples de réalisation particuliers, on comprendra qu'elle est susceptible de modifications ou variantes sans pour autant sortir de son domaine.

**Revendications**

1.  Procédé de détermination de la vitesse V d'un coureur à pied, comprenant les étapes suivantes :

- obtention d'un signal électrique (S) représentatif de son accélération verticale pendant la durée d'au moins une de ses foulées, ledit signal changeant de signe à l'instant (B) où son pied re-décolle après avoir touché le sol,
- détermination de la pente P dudit signal lorsque ce dernier change de signe, et
- calcul de la vitesse V du coureur par la formule V = a.P + b, dans laquelle a et b sont des paramètres qui lui sont propres, estimés préalablement.

**2.** Procédé selon la revendication 1, **caractérisé en ce que** :

- la pente P du signal d'accélération est déterminée pour les pieds droit et gauche du coureur, et
- sa vitesse ($V_D$, $V_G$) est calculée pour les deux pieds et affichée sous la forme d'une combinaison de ces vitesses.

**3.** Procédé selon la revendication 2, **caractérisé en ce que** la discrimination entre les deux pieds est faite à l'aide de la mesure de l'accélération latérale du coureur.

**4.** Procédé selon l'une des revendications 1 à 3, **caractérisé en ce que** l'estimation des paramètres a et b propres au coureur comprend, pour chaque pied :

- la détermination des pentes $P_1$ et $P_2$ dudit signal lorsque ce dernier change de signe pour deux vitesses différentes $V_1$ et $V_2$, et
- l'extraction des valeurs de a et b par la résolution des équations

$$V_1 = a \cdot P_1 + b \quad \text{et} \quad V_2 = a \cdot P_2 + b.$$

**5.** Procédé de détermination de la vitesse V d'un coureur à pied, comprenant les étapes suivantes :

- obtention d'un signal électrique (S) représentatif de son accélération verticale pendant la durée d'au moins une de ses foulées, ledit signal changeant de signe à l'instant (B) où son pied re-décolle après avoir touché le sol,
- détermination, à partir dudit signal, du temps t1 pendant lequel le coureur est en l'air et du temps t2 pendant lequel il est au sol, et
- calcul de sa vitesse V par la formule $V = c\,(t_2/t_1) + d$, dans laquelle c et d sont des paramètres qui lui sont propres, définis préalablement.

**6.** Dispositif de détermination de la vitesse d'un coureur par application du procédé selon la revendication 1, comprenant :

- un accéléromètre (1) propre à fournir un signal représentatif de l'accélération verticale du centre de gravité du coureur,
- un convertisseur analogique/numérique (2) pour numériser ledit signal,
- des moyens agencés pour déterminer la pente P du signal d'accélération lorsque ce dernier change de signe et pour calculer la vitesse du coureur à partir dudit signal d'accélération par la formule V = a.P + b, dans laquelle a et b sont des paramètres qui sont propres au coureur, estimés préalablement, et
- des moyens d'affichage (5) pour fournir une indication de la valeur de vitesse calculée.

**7.** Dispositif de détermination de la vitesse d'un coureur par application du procédé selon la revendication 5, comprenant :

- un accéléromètre (1) propre à fournir un signal représentatif de l'accélération verticale du centre de gravité du coureur,
- un convertisseur analogique/numérique (2) pour numériser ledit signal,
- des moyens agencés pour déterminer, à partir du signal d'accélération, le temps t1 pendant lequel le coureur est en l'air et le temps t2 pendant lequel il est au sol, et pour calculer sa vitesse V par la formule V = c (t2 / t1) + d, dans laquelle c et d sont des paramètres qui sont propres au coureur, définis préalablement, et
- des moyens d'affichage (5) pour fournir une indication de la valeur de vitesse calculée.

**8.** Dispositif selon la revendication 6 ou la revendication 7, **caractérisé en ce qu'**il est fixé au corps du coureur par le biais d'une ceinture thoracique.

**9.** Dispositif selon l'une des revendications 6 à 8, **caractérisé en ce que** les moyens d'affichage (5) sont ceux d'une montre-poignet.

**10.** Dispositif selon l'une des revendications 6 à 9, **caractérisé en ce qu'**il comporte un deuxième accéléromètre propre à fournir un signal représentatif de l'accélération latérale du centre de gravité du coureur, dans le but de distinguer les effets, sur ledit signal, des foulées engagées par le pied droit et le pied gauche.

**Patentansprüche**

1. Verfahren zur Bestimmung der Geschwindigkeit V eines Läufers, das die folgenden Schritte umfasst:

    - Erhalt eines elektrischen Signals (S), das für seine vertikale Beschleunigung während der Dauer mindestens einer seiner Tritte repräsentativ ist, wobei das Signal in dem Moment (B) das Vorzeichen wechselt, wenn sein Fuß nach Bodenberührung erneut abhebt,
    - Bestimmung der Steigung P des Signals, wenn dieses das Vorzeichen wechselt, und
    - Berechnung der Geschwindigkeit V des Läufers mit der Formel $V = a \cdot P + b$, wobei a und b ihm eigene Parameter sind, die zuvor bestimmt wurden.

2. Verfahren nach Anspruch 1, **dadurch gekennzeichnet, dass**:

    - die Steigung P des Beschleunigungssignals für den rechten und linken Fuß des Läufers bestimmt wird, und
    - seine Geschwindigkeit ($V_D$, $V_G$) für die beiden Füße berechnet und in Form einer Kombination dieser Geschwindigkeiten angezeigt wird.

3. Verfahren nach Anspruch 2, **dadurch gekennzeichnet, dass** die Unterscheidung zwischen den zwei Füßen mit Hilfe der Messung der Seitenbeschleunigung des Läufers erfolgt.

4. Verfahren nach einem der Ansprüche 1 bis 3, **dadurch gekennzeichnet, dass** die Schätzung der läufereigenen Parameter a und b für jeden Fuß umfasst:

    - die Bestimmung der Steigungen $P_1$ und $P_2$ des Signals, wenn dieses das Vorzeichen wechselt, für zwei unterschiedliche Geschwindigkeiten $V_1$ und $V_2$, und
    - die Ermittlung der Werte von a und b durch Auflösung der Gleichungen

$$V_1 = a \cdot P_1 + b \text{ und } V_2 = a \cdot P_2 + b.$$

5. Verfahren zur Bestimmung der Geschwindigkeit V eines Läufers, das die folgenden Schritte umfasst:

    - Erhalt eines elektrischen Signals (S), das für seine vertikale Beschleunigung während der Dauer mindestens einer seiner Tritte repräsentativ ist, wobei das Signal in dem Moment (B) das Vorzeichen wechselt, wenn sein Fuß nach Bodenberührung erneut abhebt,
    - Bestimmung der Zeit t1, während der sich der Läufer in der Luft befindet, und der Zeit t2, während der er am Boden ist, ausgehend von dem Signal, und
    - Berechnung der Geschwindigkeit V mit der Formel $V = c (t_2/t_1) + d$, wobei c und d ihm eigene Parameter sind, die zuvor bestimmt wurden.

6. Vorrichtung zur Bestimmung der Geschwindigkeit eines Läufers durch Anwendung des Verfahrens nach Anspruch 1, die umfasst:

    - einen Beschleunigungsmesser (1), der imstande ist, ein Signal zu liefern, das für die vertikale Beschleunigung des Schwerkraftzentrums des Läufers repräsentativ ist,
    - einen Analog-Digital-Wandler (2) zur Digitalisierung des Signals,
    - Mittel, die ausgebildet sind, um die Steigung P des Beschleunigungssignals zu bestimmen, wenn dieses das Vorzeichen wechselt und um die Geschwindigkeit des Läufers ausgehend von dem Beschleunigungssignal mit der Formel $V = a \cdot P + b$ zu berechnen, wobei a und b läufereigene Parameter sind, die zuvor bestimmt wurden,
    - Anzeigemittel (5), um eine Angabe des berechneten Geschwindigkeitswerts zu liefern.

7. Vorrichtung zur Bestimmung der Geschwindigkeit eines Läufers durch Anwendung des Verfahrens nach Anspruch 5, die umfasst:

- einen Beschleunigungsmesser (1), der imstande ist, ein Signal zu liefern, das für die vertikale Beschleunigung des Schwerkraftzentrums des Läufers repräsentativ ist,
- einen Analog-Digital-Wandler (2) zur Digitalisierung des Signals,
- Mittel, die ausgebildet sind, um ausgehend vom Beschleunigungssignal die Zeit t1 zu bestimmen, während der sich der Läufer in der Luft befindet, und die Zeit t2, während der er am Boden ist, und um seine Geschwindigkeit V mit der Formel V = c $(t_2/t_1)$ + d zu berechnen, wobei c und d läufereigene Parameter sind, die zuvor bestimmt wurden, und
- Anzeigemittel (5), um eine Angabe des berechneten Geschwindigkeitswerts zu liefern.

8.  Vorrichtung nach Anspruch 6 oder Anspruch 7, **dadurch gekennzeichnet, dass** sie anhand eines Thoraxgürtels am Körper des Läufers befestigt ist.

9.  Vorrichtung nach einem der Ansprüche 6 bis 8, **dadurch gekennzeichnet, dass** die Anzeigemittel (5) die einer Armbanduhr sind.

10. Vorrichtung nach einem der Ansprüche 6 bis 9, **dadurch gekennzeichnet, dass** sie einen zweiten Beschleunigungsmesser aufweist, der imstande ist, ein für das Schwerkraftzentrum des Läufers repräsentatives Signal mit dem Ziel zu liefern, die Wirkungen der Tritte, die von den rechten Fuß und von dem linken Fuß durchgeführt werden, auf das Signal zu unterscheiden.

**Claims**

1.  Method for determining the speed V of a runner on foot, comprising the following steps:

    - obtaining an electrical signal (S) representative of his vertical acceleration during the length of at least one of his strides, the said signal changing the sign at the moment (B) when his foot lifts again after having touched the ground,
    - determining the slope P of said signal when the latter changes its sign, and
    - calculating the speed V of the runner by the formula V = a.P + b, in which a and b are parameters that are specific to him, estimated previously.

2.  Method according to claim 1, **characterized in that** :

    - the slope P of the acceleration signal is determined for the right and left feet of the runner, and
    - its speed ($V_D$, $V_G$) is calculated for both feet and displayed in the form of a combination of those speeds.

3.  Method according to claim 2, **characterized in that** the discrimination between the two feet is done with the aide of the measurement of the lateral acceleration of the runner.

4.  Method according to one of claims 1 to 3, **characterized in that** the estimation of the parameters a and b specific to the runner comprises, for each foot:

    - determining slopes $P_1$ and $P_2$ aforesaid signal when the latter changes its sign for two different speeds $V_1$ and $V_2$, and
    - extracting values of a and b by solving the equations $V_1$ = a . $P_1$ + b and $V_2$ =a. $P_2$+b.

5.  Method for determining the speed V of a runner on foot, comprising the following steps:

    - obtaining an electrical signal (S) representative of his vertical acceleration during the length of at least one of his strides, the said signal changing the sign at the moment (B) when his foot lifts again after having touched the ground,
    - determining, from aforesaid signal, some time t1 during which the runner is in the air and some time t2 during which he is on the ground, and
    - calculating his speed V by the formula V = c $(t_2/t_1)$ + d, in which c and d are parameters that are specific to him, defined previously.

6.  Device for determining the speed of a runner by applying the method according to claim 1, comprising:

- an accelerometer (1) capable of providing a signal representative of the vertical acceleration of the runner's center of gravity,
- an analog/digital converter (2) to digitize the said signal,
- means arranged to determine the slope P of the acceleration signal when the latter changes its sign and to calculate the speed of the runner from aforesaid acceleration signal by the formula V = a. P + b, in which a and b are parameters that are specific to the runner, estimated previously, and
- display means (5) to provide an indication of the calculated speed value.

7. Device for determining the speed of a runner by applying the method according to claim 5, comprising:

- an accelerometer (1) capable of providing a signal representative of the vertical acceleration of the runner's center of gravity,
- an analog/digital converter (2) to digitize the said signal,
- means arranged to determine, from the acceleration signal, the time t1 during which the runner is in the air and the time t2 during which he is on the ground, and to calculate his speed V by the formula $V = c\,(t_2 / t_1) + d$, in which c and d are parameters that are specific to the runner, defined previously, and
- display means (5) to provide an indication of the calculated speed value.

8. Device according to claim 6 or the claim 7, **characterized in that** it is fastened to the runner's body by way of a thoracic belt.

9. Device according to one of claims 6 to 8, **characterized in that** the display means (5) are those of a wristwatch.

10. Device according to one of claims 6 to 9, **characterized in that** it comprises a second accelerometer capable of providing a signal representative of the lateral acceleration of the runner's center of gravity, for the purpose of distinguishing the effects, on the said signal, strides taken by the right foot and the left foot.

Fig. 1

Fig. 3

Fig. 2

Fig. 4

**EP 1 913 336 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1253404 A